(19) Europäisches Patentamt
European Patent Office
Office européen des brevets

(11) **EP 4 369 699 A1**

(12) **EUROPEAN PATENT APPLICATION**
published in accordance with Art. 153(4) EPC

(43) Date of publication:
**15.05.2024 Bulletin 2024/20**

(21) Application number: **22837930.1**

(22) Date of filing: **05.07.2022**

(51) International Patent Classification (IPC):
*H04N 5/00* *(2011.01)*

(52) Cooperative Patent Classification (CPC):
**H04N 23/00**

(86) International application number:
**PCT/KR2022/009659**

(87) International publication number:
**WO 2023/282578 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.07.2021 KR 20210087913**

(71) Applicant: **LG INNOTEK CO., LTD.**
**Seoul 07796 (KR)**

(72) Inventors:
• **MOON, Da Hin**
**Seoul 07796 (KR)**
• **PARK, Jin Young**
**Seoul 07796 (KR)**

(74) Representative: **DREISS Patentanwälte PartG mbB**
**Friedrichstraße 6**
**70174 Stuttgart (DE)**

(54) **CAMERA MODULE**

(57) A camera module comprises: a housing including a first space; a lens holder which is disposed at least partially in the first space and includes a second space; a lens module which is disposed in the second space and includes a plurality of lenses; and a printed circuit board which is disposed under the housing and has an image sensor disposed on the upper surface thereof, the image sensor being aligned with the lenses. The second space includes a first area having a first cross-sectional area and a second area having a second cross-sectional area greater than the first cross-sectional area. The plurality of lenses includes an outermost lens disposed in the second area, a lowermost lens disposed in the first area, and a plurality of central lenses disposed between the outermost lens and the lowermost lens. A portion of the plurality of the central lenses is disposed in the first area, and another portion is disposed in the second area.

【FIG. 1】

## Description

[Technical Field]

The teachings in accordance with exemplary and non-limiting embodiments of this invention relate generally to a camera module.

[Background Art]

In recent years, subminiature camera modules have been developed, and subminiature camera modules are widely used in small electronic products such as smartphones, laptops, game consoles, etc. With the popularity of automobiles, subminiature cameras are not only used in small electronic products, but also in vehicles. For example, subminiature cameras are used as black box cameras for vehicle protection or objective data of traffic accidents, rear view cameras that allow the driver to monitor the blind spots at the rear of the vehicle through the screen to ensure safety when reversing, and perimeter detection cameras that can monitor the surroundings of the vehicle.

The camera may include a lens, a lens holder for receiving the lens, an image sensor for converting an image of a subject gathered by the lens into an electrical signal, and a printed circuit board on which the image sensor is mounted. A housing forming the exterior of the camera may have an enclosed structure throughout to prevent contamination of the internal components with foreign matter, including moisture.

Components such as housings or lens holders can expand at high temperatures and contract at low temperatures as the temperature changes. The problem with this deformation is that it changes the distance between the image sensor and the lens.

[Detailed Description of Invention]

[Technical Subject]

It is an object of the present exemplary embodiment to provide a camera module that can minimize the change in distance between an image sensor and a lens module due to a change in temperature by improving the structure.

[Technical Solution]

A camera module according to an exemplary embodiment of the present invention may comprise: a housing including a first space; a lens holder which is disposed at least partially in the first space and includes a second space; a lens module which is disposed in the second space and includes a plurality of lenses; and a printed circuit board which is disposed under the housing and has an image sensor disposed on the upper surface thereof, the image sensor being aligned with the lenses, wherein the second space includes a first area having a first cross-sectional area and a second area having a second cross-sectional area greater than the first cross-sectional area, wherein the plurality of lenses includes an outermost lens disposed in the second area, a lowermost lens disposed in the first area, and a plurality of central lenses disposed between the outermost lens and the lowermost lens, and wherein a portion of the plurality of the central lenses is disposed in the first area, and another portion is disposed in the second area.

Preferably, but not necessarily, the lens disposed at an uppermost end of the first region and the lens disposed at a lowermost end of the second region may be interconnected.

Preferably, but not necessarily, the plurality of lenses disposed in the first region may be interconnected in the optical axis direction.

Preferably, but not necessarily, an inner surface of the lens holder may be provided with an inwardly protruding staircase, and the first region may be formed on an inner side of the staircase.

Preferably, but not necessarily, a length of the housing, relative to the optical axis direction, may be longer than a length from a top of the first region to a bottom of the housing.

Preferably, but not necessarily, an outer surface of the lens holder may include a protrusion projecting outwardly and facing an upper surface of the housing, and an epoxy may be disposed between the protrusion and the upper surface of the housing.

Preferably, but not necessarily, a length from the bottom of the protrusion to the top of the first region, relative to the optical axis direction, may be less than a length from the top of the first region to the bottom of the housing.

Preferably, but not necessarily, the length of the first region may be greater than one-tenth of the length of the lens holder.

Preferably, but not necessarily, at least a portion of the lens holder may be screwed into the first space.

A camera module according to another exemplary embodiment may comprise: a

housing including a first space;
a lens holder disposed at least partially within the first space, and including a second space;
a lens module including a plurality of lenses disposed within the second space; and
a printed circuit board disposed in a lower portion of the housing and having an image sensor disposed on a top surface aligned with the lenses, wherein the lens holder includes a staircase projecting inwardly from an inner surface of the second space, the plurality of lenses having at least a portion disposed inwardly of the staircase, and a remaining portion disposed outwardly of the staircase, and wherein a lens disposed at the uppermost end of the lenses disposed inwardly of the staircase is interconnected with a lens disposed at the lowermost end of the lenses disposed outwardly of the staircase.

[Advantageous Effect]

The exemplary embodiments of the present invention have the advantages in that the distance between the lens and the image sensor can be easily predicted as the temperature changes compared to a conventional structure in which a staircase is placed at the bottom of the lens barrel, so that the image sensor can maintain a constant distance between the lens module in consideration of the material properties of the epoxy and the housing, and as a result, the resolution power of the camera module can be stabilized.

[Brief Description of Drawings]

FIG. 1 is a cross-sectional view of a camera module according to a first exemplary embodiment of the present invention.
FIG. 2 is a cross-sectional view of a camera module according to a second exemplary embodiment of the present invention.

[Best Mode]

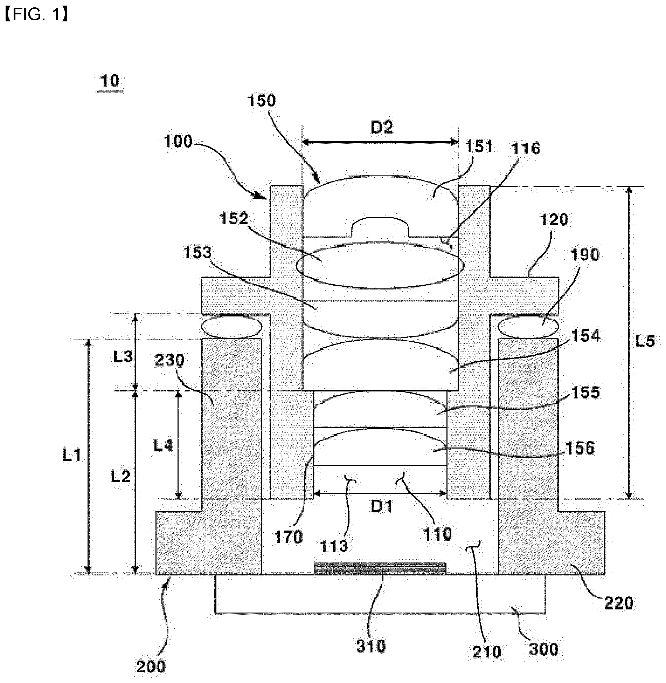

Hereinafter, exemplary embodiments of the present invention will be described in detail with reference to the accompanying drawings.
However, the present invention is not limited to the given exemplary embodiments described, but may be implemented in a variety of different forms, and one or more of components among the exemplary embodiments may be optionally combined or substituted between embodiments within the scope of the present invention.
Furthermore, terms (including technical and scientific terms) used in the embodiments of the present invention, unless expressly specifically defined and described, are to be interpreted in the sense in which they would be understood by a person of ordinary skill in the art to which the present invention belongs, and commonly used terms, such as dictionary-defined terms, are to be interpreted in light of their contextual meaning in the relevant art.
Furthermore, the terms used in the embodiments of the invention are intended to describe the embodiments and are not intended to limit the invention. In this specification, the singular may include the plural unless the context otherwise requires, and references to "at least one (or more) of A and (or) B and C" may include one or more of any combination of A, B, and C that may be assembled.
In addition, the terms first, second, A, B, (a), (b), and the like may be used to describe components of embodiments of the invention. Such terms are intended only to distinguish one component from another, and are not intended to limit the nature or sequence or order of such components by such terms.
Furthermore, when a component is described as "connected," "coupled," or "attached" to another component, it can include cases where the component is "connected," "coupled," or "attached" to the other component directly, as well as cases where the component is "connected," "coupled," or "attached" to another component that is between the component and the other component.
Furthermore, when described as being formed or disposed "above" or "below" each component, "above" or "below" includes not only when two components are in direct contact with each other, but also when one or more other components are formed or disposed between the two components. Furthermore, when expressed as "above" or "below", it may include the meaning of upward as well as downward with respect to a single component. FIG. 1 is a cross-sectional view of a camera module according to a first exemplary embodiment of the present invention.
Referring to FIG. 1, a camera module (10) according to a first exemplary embodiment of the present invention may comprise a lens holder (100), a housing (200), and a printed circuit board (300), but may be implemented without some of these configurations, and may not rule out including other additional configurations.
The housing (200) may form the external shape of the camera module (10). The housing (200) may accommodate at least a portion of the lens holder (100). On an inner side of the housing (200), a first space (210) may be formed for receiving the lens holder (100). The housing (200) may have a top and bottom open shape. The housing (200) may have an oblong cross-sectional shape.
The housing (200) and the lens holder (100) may be formed of a plastic material, but may alternatively be formed of a metal material.
The housing (200) may include a body portion (230), and a flange portion (220) projecting outwardly from a bottom of the body portion (230). The flange (220) may be shaped such that some of the sides of the body portion (230) project outwardly. The sides of the flange portion (220) may be arranged to project outwardly from the sides of the body portion (230). A cross-sectional area of the flange portion (220) may be formed larger than a cross-sectional area of the body portion (230). The flange portion (220) forms the bottom of the housing (200), which may be disposed with its bottom side facing the top side of the printed circuit board (300). A lower side of the housing (200), i.e., a portion of the lower side of the flange (220), may be in contact with the upper side of the printed circuit board (300). The first space (210) may be formed on an inner side of the body portion (230) and the flange portion (220).
At least a portion of the lens holder (100) may be disposed within the housing (200), and another portion may be disposed to protrude upwardly from the housing (200). At least a portion of the lens holder (100) may be disposed on an inner side of the body portion (230).

The lens holder (100) may comprise a protrusion (120) projecting outwardly from an outer surface. The protrusion (120) may protrude from an outer surface of the lens holder (100) such that they have an increased cross-sectional area than other areas. A bottom side of the protrusion (120) may be disposed to face an upper surface of the housing (200) in an upward and downward direction (optical axis direction). A bottom surface of the protrusion (120) may be coupled to a top surface of the housing (200).

Between the bottom surface of the protrusion (120) and the top surface of the housing (200), an adhesive portion (190) may be disposed. The adhesive portion (190) may be an area where an adhesive is applied. The adhesive may comprise an epoxy. The adhesive portion (190) may have a top surface coupled to a bottom surface of the protrusion (120), and a bottom surface coupled to a top surface of the housing (200), thereby mutually coupling the lens holder (100) and the housing (200). The adhesive portion (190) may have a ring-shaped cross-section. The lens holder (100) may include a second space (110) to receive a lens module (150) on its inner side. The lens holder (100) may be named a lens barrel due to the fact that the lens module (150) is disposed on the inner side of the lens holder (100).

The lens module (150) may be disposed on an inner side of the lens holder (100). The top end of the lens module (150) may form the top surface of the camera module (10). The outermost-disposed lens of the lenses comprising the lens module (150) may be disposed to protrude upwardly of the lens holder (100). The top end of the lens module (150) may project further upwardly of the camera module (10) than other areas. The lens module (150) may comprise a plurality of lenses. The lens module (150) may be disposed to face the image sensor (310) of the printed circuit board (300) in an optical axis direction. The lens module (150) may be aligned with the image sensor (310). An optical axis of the lens module (150) may coincide with an optical axis of the image sensor (310). An infrared ray filter (IR filter) may be disposed between the lens module (150) and the image sensor (310).

The printed circuit board (300) may be coupled to a bottom surface of the housing (200). A top surface of the printed circuit board (300) may be in contact with a bottom surface of the housing (200). On the top surface of the printed circuit board (300), the image sensor (310) may be disposed. The image sensor (310) may be arranged to face the lens module (150) in the optical axis direction.

The camera module (10) according to the exemplary embodiment of the present embodiment is characterized by the arrangement structure of the lens module (150) within the lens holder (100).

To be more specific, the second space (110) may have a plurality of regions having different cross-sectional areas. The second space (110) may include a first region (113) having a first cross-sectional area (D1), and a second region (116) having a second cross-sectional area (D2) larger than the first cross-sectional area (D1). The first region (113) may be disposed at a lower part of the second region (116). With respect to the optical axis direction, the first region (113) may be disposed closer to the image sensor (310) than the second region (116).

On the inner surface of the lens holder (100), an inwardly protruding staircase (170) may be disposed. On the inner side of staircase (170) may be disposed the first region (113), and on the inner side of a region of the inner surface of the lens holder (100) other than the region forming the staircase (170), the second region (116) may be disposed. The lens module (150) may have at least a portion disposed in the first region (113) and a remaining portion disposed in the second region (116). Due to the difference in cross-sectional area of the first region (113) and the second region (116), at least some of the plurality of lenses of the lens module (150) may have different cross-sectional areas. For example, a cross-sectional area of a lens disposed in the first region (113) may be smaller than a cross-sectional area of a lens disposed in the second region (116).

The plurality of lenses in the lens module (150) may include a first lens (151), a second lens (152), a third lens (153), a fourth lens (154), a fifth lens (155), and a sixth lens (156), based on distance from the image sensor (310). The first lens (151) may be an outermost lens. The sixth lens (156) may be disposed closer to the image sensor (310) than the first to fifth lenses (151, 152, 153, 154, 155). The sixth lens (156) may be a bottommost lens disposed at the bottom of the plurality of lenses.

The camera module (10) according to the exemplary embodiment may comprise a plurality of lenses, wherein the plurality of lenses may comprise an outermost lens, a lowermost lens, and a plurality of central lenses disposed between the outermost lens and the lowermost lens, as described above. That is, the plurality of central lenses may be the second lens (152), the third lens (153), the fourth lens (154), and the fifth lens (155), with reference to FIG. 1.

Further, some of the plurality of central lenses may be disposed in the first region (113) and others may be disposed in the second region (116). Further, the lens disposed at the lowermost end of the second region (116) may be coupled with the lens disposed at the uppermost end within the first region (113), that is, the fourth lens (154) and the fifth lens (155) may be mutually coupled. The coupling of the fourth lens (154) and the fifth lens (155) may be achieved via an adhesive. A spacer (not shown) may be disposed between the fourth lens (154) and the fifth lens (155) to join the fourth lens (154) and the fifth lens (155).

The plurality of lenses disposed within the first region (113) may be interconnected. Accordingly, the lens disposed at the lowermost end of the second region (116), and the lenses disposed within the first region (113), may be interconnected in the optical axis direction. In this case, the fourth lens (154) and the fifth lens (155), the fifth lens (155) and the sixth lens (156) may be mutually coupled. On the other hand, a length (L1) of the housing (200) in the optical axis direction may be formed that is longer than a length (L2) from a top of the first region (113) to a bottom of the housing (200).

Based on the optical axis direction, a length (L3) from the bottom of the protrusion (120) to the top of the first region (113) may be formed less than the length (L2) from the top of the first region (113) to the bottom of the housing (200).

Based on the optical axis direction, a length (L4) of the first region (113) may be formed to be greater than 1/10 of a length (L5) of the lens holder (100). That is, the (L4) and the (L5) may have the following Relational Expression.

$$L4 > L5/10, \text{ (Relational Expression)}$$

According to the above Relational Expression, it may be understood that the top of the first region (113), which forms the accommodation surface of the lens module (150), is formed in an area greater than 1/10 of the total length of the lens holder (100) in the optical axis direction.

According to the above structure, it is possible to easily predict changes in the distance between the lens and the image sensor due to temperature changes compared to a conventional structure in which a staircase is disposed at the bottom of the lens barrel, so that the image sensor can maintain a constant distance between the lens modules in consideration of the material properties of the epoxy and the housing, and as a result, the resolution power of the camera module can be stabilized.

Hereinafter, a camera module according to the second embodiment of the present invention will be described.

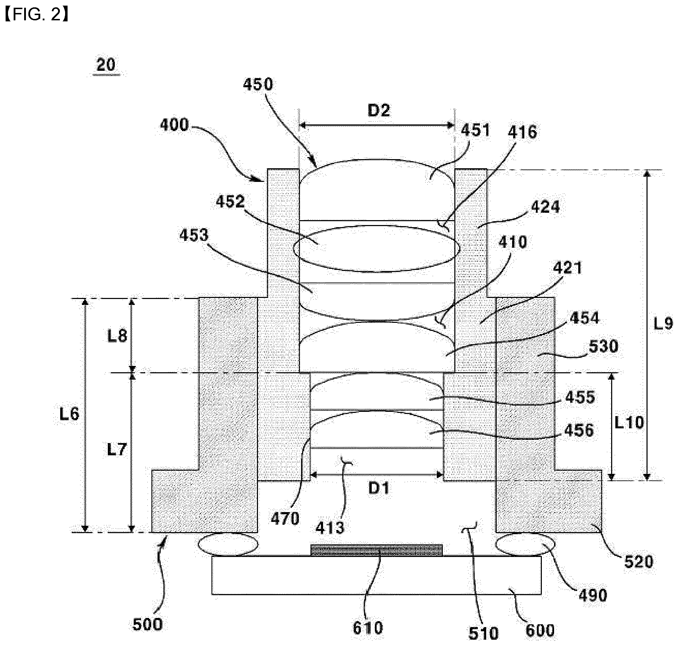

FIG. 2 is a cross-sectional view of a camera module according to the second exemplary embodiment of the present invention.

Referring now to FIG. 2, a camera module (20) according to a second exemplary embodiment of the present invention may include a lens holder (400), a housing (500) and a printed circuit board (600), but this does not exclude any of these configurations, nor does it exclude additional configurations.

The housing (500) may form the exterior of the camera module (20). The housing (500) may accommodate at least a portion of the lens holder (400). On an inner side of the housing (500), a first space (510) may be formed for receiving the lens holder (400). The housing (200) may have a top and bottom open shape. The housing (200) may have an oblong cross-sectional shape.

The housing (500) and the lens holder (400) may be formed of a plastic material, but may alternatively be formed of a metal material.

The housing (500) may include a body portion (530), and a flange portion (520) projecting outwardly from a bottom of the body portion (530). The flange portion (520) may have a shape such that some of the sides of the body portion (530) project outwardly. The sides of the flange portion (520) may be arranged to project outwardly from the sides of the body portion (530). A cross-sectional area of the flange portion (520) may be formed larger than a cross-sectional area of the body portion (530). The flange portion (520) may form a bottom of the housing (500), which may be disposed with its bottom side facing a top side of the printed circuit board (600). One of the sides of the housing (500), i.e., one of the sides of the flange portion (520) may be in contact with the top surface of the printed circuit board (600). The first space (510) may be formed on an inner side of the body portion (530) and the flange portion (520). A screw thread or threaded groove for screwing with the lens holder (400) may be formed on the inner surface of the first space (510).

At least a portion of the lens holder (400) may be disposed within the housing (500), and another portion may be disposed to protrude upwardly from the housing (500). At least a portion of the lens holder (400) may be disposed on an inner side of the body portion (530).

The lens holder (400) may comprise a first body (421) and a second body (424). With respect to the optical axis direction, the first body (421) may be disposed at a lower portion of the second body (424). A cross-sectional area of the first body (421) may be formed larger than a cross-sectional area of the second body (424). The first body (421) may be disposed within the first space (510). The first body (421) may be screwed to an inner surface of the first space (510). A threaded groove or screw thread may be formed on an outer surface of the first body (421) for screw engagement.

An adhesive portion (490) may be disposed between the housing (500) and the printed circuit board (600). The adhesive portion (490) may be an area where an adhesive is applied. The adhesive may comprise an epoxy. The adhesive portion (490) may have a top surface coupled to a bottom surface of the housing (500), and a bottom surface coupled to a top surface of the printed circuit board (600), thereby mutually coupling the housing (500) and the printed circuit board (600). The adhesive portion (490) may have a ring-shaped cross-section.

The lens holder (400) may include a second space (410) to accommodate a lens module (450) on its inner side. In that the lens module (450) is disposed on the inner side of the lens holder (400), the lens holder (400) may be referred to as a lens barrel. The lens module (450) may be disposed on an inner side of the lens holder (400). A top of the lens module (450) may form a top surface of the camera module (20). The outermost of the lenses comprising the lens module (450) may be disposed to protrude upwardly of the lens holder (400). The top of the lens module (450) may project further upwardly of the camera module (20) than other areas.

The lens module (450) may include a plurality of lenses. The lens module (450) may be disposed to face the image sensor (610) of the printed circuit board (600) in an optical axis direction. The lens module (450) may be aligned with the image sensor (610). An optical axis of the lens module (450) may coincide with an optical axis of the image sensor (610). An infrared ray filter (IR filter) may be disposed between the lens module (450) and the image sensor (610). The printed circuit board (600) may be coupled to the underside of the housing (500). On a top surface of the printed circuit board (600), the image sensor (610) may be disposed. The image sensor (610) may be disposed to face the lens module (450) in an optical axis direction.

The second space (410) may have a plurality of regions having different cross-sectional areas. The second space (410) may include a first region (413) having a first cross-sectional area (D1) and a second region (416) having a second cross-sectional area (D2) larger than the first cross-sectional area. The first region (413) may be disposed below the second region (416). With respect to the optical axis direction, the first region (413) may be disposed closer to the image sensor (610) than the second region (416).

On the inner surface of the lens holder (400), an inwardly protruding staircase (470) may be disposed. On the inward side of the staircase (470) is disposed the first region (413), and on the inward side of a region of the inner surface of the lens holder (400) other than the region forming the staircase (470) is disposed the second region 416. The lens module (450) may have at least a portion disposed in the first region (413) and a remaining portion disposed in the second region (416). Due to the difference in cross-sectional area of the first region (413) and the second region (416), at least some of the plurality of lenses of the lens module (450) may have different cross-sectional areas. In one example, a cross-sectional area of a lens disposed within the first region (413) may be smaller than a cross-sectional area of a lens disposed within the second region (416).

The plurality of lenses in the lens module (450) may include a first lens (451), a second lens (452), a third lens (453), a fourth lens (454), a fifth lens (455), and a sixth lens (456), based on distance from the image sensor (610). The first lens (451) may be an outermost lens. The sixth lens (456) may be disposed closer to the image sensor (610) than the first to fifth lenses (451, 452, 453, 454, 455). The sixth lens (456) may be a lowermost lens disposed at the lowermost end of the plurality of lenses

The camera module (20) according to the exemplary embodiment may comprise a plurality of lenses, wherein the plurality of lenses may comprise an outermost lens, a lowermost lens, and a plurality of central lenses disposed between the outermost lens and the lowermost lens, as described above. That is, the plurality of central lenses may be the second lens (452), the third lens (453), the fourth lens (454), and the fifth lens (455), with reference to FIG. 2.

Further, some of the plurality of central lenses may be disposed in the first region (413), and others may be disposed in the second region (416). Further, the lens disposed at the bottom of the second region (416) may be coupled to the lens disposed at the top within the first region (413), i.e., the fourth lens (454) and the fifth lens (455) may be mutually coupled. The coupling of the fourth lens (454) and the fifth lens (455) may be achieved via an adhesive. A spacer (not shown) may be disposed between the fourth lens (454) and the fifth lens (455) to join the fourth lens (454) and the fifth lens (455).

The plurality of lenses disposed within the first region (413) may be interconnected. Accordingly, the lens disposed at the bottom of the second region (416), and the lenses disposed within the first region (413), may be mutually coupled in the optical axis direction. In this case, the fourth lens (454) and the fifth lens (455), the fifth lens (455) and the sixth lens (456) may be mutually coupled. On the other hand, with reference to the optical axis direction, a length (L6) of the housing (500) may be formed to be longer than a length (L7) from the top of the first region (413) to the bottom of the housing (500).

Based on the optical axis direction, a length (L8) from the top surface of the housing (500) to the top of the first region (413) may be formed smaller than the length (L7) from the top of the first region (413) to the bottom surface of the housing (500).

Based on the optical axis direction, a length (L10) of the first region (413) may be formed to be greater than 1/10 of a length (L9) of the lens holder (400). That is, the (L9) and the (L10) may have the following Relational Expression.

## L10 > L9/10, (Relational Expression)

According to the above Relational Expression, it can be understood that the top of the first region (413), which forms the accommodation surface of the lens module (450), is formed in an area that is higher than 1/10 of the total length of the lens holder (400) in the optical axis direction.

Although all of the components comprising embodiments of the present invention have been described above as combining or operating in combination, the present invention is not necessarily limited to these embodiments, i.e., all of the components may optionally operate in combination with one or more of the components, as long as they are within the scope of the present invention. Further, the terms "comprising," "consisting of," or "having" as used herein, unless specifically indicated to the contrary, are to be construed to mean that the components may be inherent in, and not to exclude, other components.

All terms, including technical or scientific terms, shall, unless otherwise defined, have the same meaning as commonly understood by one of ordinary skill in the art to which this invention belongs. Commonly used terms, such as dictionary-defined terms, are to be interpreted as consistent with their contextual meaning in the relevant art and are not to be construed in an idealized or overly formal sense unless expressly defined in the present invention.

The above description is merely an exemplary description of the technical ideas of the invention, and various modifications and variations will be apparent to one having ordinary skill in the technical field to which the invention belongs without departing from the essential features of the invention. Accordingly, the embodiments disclosed herein are intended to illustrate and not to limit the technical ideas of the invention, and the scope of the technical ideas of the invention is not limited by these embodiments. The scope of protection of the present invention shall be construed in accordance with the following claims, and all technical ideas within the scope of the equivalents shall be construed to be included in the scope of the present invention.

## Claims

1. A camera module comprising:

   a housing including a first space;
   a lens holder which is disposed at least partially in the first space and includes a second space;
   a lens module which is disposed in the second space and includes a plurality of lenses; and
   a printed circuit board which is disposed under the housing and has an image sensor disposed on the upper surface thereof, the image sensor being aligned with the lenses, wherein the second space includes a first area having a first cross-sectional area and a second area having a second cross-sectional area greater than the first cross-sectional area, wherein the plurality of lenses includes an outermost lens disposed in the second area, a lowermost lens disposed in the first area, and a plurality of central lenses disposed between the outermost lens and the lowermost lens, and wherein a portion of the plurality of the central lenses is disposed in the first area, and another portion is disposed in the second area.

2. The camera module of claim 1, wherein the lens disposed at an uppermost end of the first region and the lens disposed at a lowermost end of the second region are interconnected.

3. The camera module of claim 2, wherein the plurality of lenses disposed in the first region is interconnected in the optical axis direction.

4. The camera module of claim 1, wherein an inner surface of the lens holder is provided with an inwardly protruding staircase, and the first region is formed on an inner side of the staircase.

5. The camera module of claim 1, wherein a length of the housing, relative to the optical axis direction, is longer than a length from a top of the first region to a bottom of the housing.

6. The camera module of claim 1, wherein an outer surface of the lens holder includes a protrusion projecting outwardly and facing an upper surface of the housing, and an epoxy is disposed between the protrusion and the upper surface of the housing.

7. The camera module of claim 6, wherein a length from the bottom of the protrusion to the top of the first region, relative to the optical axis direction, is less than a length from the top of the first region to the bottom of the housing.

8. The camera module of claim 1, wherein the length of the first region is greater than one-tenth of the length of the lens holder.

9. The camera module of claim 1, wherein at least a portion of the lens holder is screwed into the first space.

10. A camera module comprising:

    a housing including a first space;
    a lens holder disposed at least partially within the first space, and including a second space;
    a lens module including a plurality of lenses disposed within the second space; and
    a printed circuit board disposed in a lower portion of the housing and having an image sensor disposed on a top surface aligned with the lenses, wherein the lens holder includes a staircase projecting inwardly from an inner surface of the second space, the plurality of lenses having at least a portion disposed inwardly of the staircase, and a remaining portion disposed outwardly of the staircase, and wherein a lens disposed at the uppermost end of the lenses disposed inwardly of the staircase is interconnected with a lens disposed at the lowermost end of the lenses disposed outwardly of the staircase.

【FIG. 1】

【FIG. 2】

# EP 4 369 699 A1

<table>
<tr><td colspan="2">INTERNATIONAL SEARCH REPORT</td><td>International application No.<br>**PCT/KR2022/009659**</td></tr>
</table>

**A.    CLASSIFICATION OF SUBJECT MATTER**

H04N 5/225(2006.01)i

According to International Patent Classification (IPC) or to both national classification and IPC

**B.    FIELDS SEARCHED**

Minimum documentation searched (classification system followed by classification symbols)

H04N 5/225(2006.01); B60R 1/00(2006.01); G02B 7/02(2006.01); G03B 17/08(2006.01); G03B 17/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 렌즈홀더(lens holder), 에폭시(epoxy), 단차(gap), 하우징 (housing), 렌즈(lens)

**C.    DOCUMENTS CONSIDERED TO BE RELEVANT**

| Category* | Citation of document, with indication, where appropriate, of the relevant passages | Relevant to claim No. |
|---|---|---|
| X | JP 2013-231993 A (HITACHI MAXELL LTD.) 14 November 2013 (2013-11-14)<br>See paragraphs [0012], [0014]-[0019] and [0033]-[0035]; and figures 1-2 and 5. | 1-5,8-10 |
| Y | | 6-7 |
| Y | KR 10-2016-0104316 A (LG INNOTEK CO., LTD.) 05 September 2016 (2016-09-05)<br>See paragraphs [0027]-[0028]; and figure 2. | 6-7 |
| A | KR 10-2016-0073594 A (LG INNOTEK CO., LTD.) 27 June 2016 (2016-06-27)<br>See paragraphs [0031]-[0060]; and figures 1-3. | 1-10 |
| A | KR 10-2017-0027073 A (LG INNOTEK CO., LTD.) 09 March 2017 (2017-03-09)<br>See paragraphs [0032]-[0044] and [0051]-[0083]; and figures 1-3. | 1-10 |
| A | KR 20-2014-0000119 U (SEKONIX CO., LTD.) 08 January 2014 (2014-01-08)<br>See paragraphs [0019]-[0027]; and figures 2-3. | 1-10 |

☐ Further documents are listed in the continuation of Box C.        ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **06 October 2022** | **06 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><th colspan="2" align="center">INTERNATIONAL SEARCH REPORT<br>Information on patent family members</th><th colspan="2">International application No.<br><br>**PCT/KR2022/009659**</th></tr>
</table>

| Patent document cited in search report | | | Publication date (day/month/year) | Patent family member(s) | | | Publication date (day/month/year) |
|---|---|---|---|---|---|---|---|
| JP | 2013-231993 | A | 14 November 2013 | JP | 2012-155337 | A | 16 August 2012 |
| | | | | JP | 5437429 | B2 | 12 March 2014 |
| | | | | JP | 5685625 | B2 | 18 March 2015 |
| KR | 10-2016-0104316 | A | 05 September 2016 | KR | 10-2021-0091108 | A | 21 July 2021 |
| | | | | KR | 10-2279786 | B1 | 21 July 2021 |
| | | | | KR | 10-2427350 | B1 | 01 August 2022 |
| KR | 10-2016-0073594 | A | 27 June 2016 | KR | 10-2326535 | B1 | 16 November 2021 |
| | | | | US | 10365451 | B2 | 30 July 2019 |
| | | | | US | 2018-0011280 | A1 | 11 January 2018 |
| | | | | WO | 2016-099127 | A1 | 23 June 2016 |
| KR | 10-2017-0027073 | A | 09 March 2017 | CN | 108293086 | A | 17 July 2018 |
| | | | | CN | 108293086 | B | 18 August 2020 |
| | | | | CN | 111970418 | A | 20 November 2020 |
| | | | | CN | 111970418 | B | 04 March 2022 |
| | | | | EP | 3346692 | A1 | 11 July 2018 |
| | | | | EP | 3346692 | A4 | 29 August 2018 |
| | | | | EP | 3346692 | B1 | 30 September 2020 |
| | | | | EP | 3840355 | A2 | 23 June 2021 |
| | | | | EP | 3840355 | A3 | 15 September 2021 |
| | | | | KR | 10-2022-0035897 | A | 22 March 2022 |
| | | | | KR | 10-2374766 | B1 | 16 March 2022 |
| | | | | US | 10440242 | B2 | 08 October 2019 |
| | | | | US | 10979606 | B2 | 13 April 2021 |
| | | | | US | 11381718 | B2 | 05 July 2022 |
| | | | | US | 2018-0255213 | A1 | 06 September 2018 |
| | | | | US | 2019-0387136 | A1 | 19 December 2019 |
| | | | | US | 2021-0211562 | A1 | 08 July 2021 |
| | | | | WO | 2017-039276 | A1 | 09 March 2017 |
| KR | 20-2014-0000119 | U | 08 January 2014 | KR | 20-0471880 | Y1 | 19 March 2014 |

Form PCT/ISA/210 (patent family annex) (July 2022)